(19) Europäisches Patentamt
European Patent Office
Office européen des brevets

(11) EP 1 596 657 B1

# (12) EUROPEAN PATENT SPECIFICATION

(45) Date of publication and mention of the grant of the patent:
**23.08.2006 Bulletin 2006/34**

(21) Application number: **04710039.1**

(22) Date of filing: **11.02.2004**

(51) Int Cl.:
***A01N 43/80*** *(2006.01)*

(86) International application number:
**PCT/EP2004/002389**

(87) International publication number:
**WO 2004/073401 (02.09.2004 Gazette 2004/36)**

## (54) FUNGICIDE COMPOSITION COMPRISING FENAMIDONE AND HYMEXAZOL

FENAMIDONE UND HYMEXAZOL ENTHALTENDE FUNGIZIDE ZUSAMMENSETZUNG

COMPOSITION FONGICIDE A BASE DE FENAMIDONE ET D'HYMEXAZOL

(84) Designated Contracting States:
**AT BE BG CH CY CZ DE DK EE ES FI FR GB GR HU IE IT LI LU MC NL PT RO SE SI SK TR**

(30) Priority: **20.02.2003 JP 2003042540**

(43) Date of publication of application:
**23.11.2005 Bulletin 2005/47**

(73) Proprietor: **Bayer CropScience S.A.**
**69009 Lyon (FR)**

(72) Inventors:
- **SAKURAI, Tadashi**
  **4-go, 9511-ban, Yuki, Yuki-shi, Ibaraki- (JP)**
- **INOUE, Daisuke**
  **4-go, 9511-ban, Yuki, Yuki-shi, Ibaraki- (JP)**
- **SAWAI, Nobumitsy**
  **4-go, 9511-ban, Yuki, Yuki-shi, Ibaraki- (JP)**

(56) References cited:
**WO-A-96/03044**

- **DATABASE CHEMABS [Online] CHEMICAL ABSTRACTS SERVICE, COLUMBUS, OHIO, US; S.L.CHOI ET AL.: "Studies of rice seedling blight control with some chemicals and environmental conditions at nursery boxes" XP002291771 retrieved from STN-INTERNATIONAL Database accession no. 103:118066 & NONGSA SIHOM YONGU POGO, vol. 26, no. 1, 1984, pages 1-8,**
- **DATABASE CHEMABS [Online] CHEMICAL ABSTRACTS SERVICE, COLUMBUS, OHIO, US; B.LOU ET AL.: "Resistance to metalaxyl and biological control of Pythium spp." XP002291763 retrieved from STN-INTERNATIONAL Database accession no. 135:254338 & ZHIWU BAOHU XUEBAO, vol. 28, no. 1, 2001, pages 55-60,**
- **DATABASE CHEMABS [Online] CHEMICAL ABSTRACTS SERVICE, COLUMBUS, OHIO, US; R.T.MERCER ET AL.: "RPA 407213: a novel fungicide for the control of downy mildews, late blight and other diseases on a range of crops" XP002291764 retrieved from STN-INTERNATIONAL Database accession no. 131: 210352 & BRIGHTON CROP PROTECTION CONFERENCE -- PESTS AND DISEASES, vol. 2, 1998, pages 319-326,**
- **DATABASE CHEMABS [Online] CHEMICAL ABSTRACTS SERVICE, COLUMBUS, OHIO, US; S.KATO ET AL.: "Control of Pythium damping-off on rice sedlings with hymexazol" XP002291765 retrieved from STN-INTERNATIONAL Database accession no. 114:223421 & SANKYO KENKUSHO NENPO, vol. 42, 1990, pages 113-116,**
- **DATABASE CHEMABS [Online] CHEMICAL ABSTRACTS SERVICE, COLUMBUS, OHIO, US; XP002291772 retrieved from STN-INTERNATIONAL Database accession no. 139: 256691 & CN 1 378 782 A (GUIZHOU UNIV.) 13 November 2002 (2002-11-13)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 596 657 B1

## Description

The present invention relates to a fungicide composition for agriculture and horticulture, in particular to a fungicide composition for agriculture and horticulture showing excellent control effect on fungi on rice plants, which can be useful as alternative agent to prevent the damage caused by the reduction of control efficacy, notably after the occurrence of resistant species of fungi to metalaxyl.
Hitherto, as a purpose of control of rice seedling blight caused by Pythium species, prevention of molded seedlings or keeping seedlings in good growth conditions during the time period of rice seedling preparation, mainly a straight formulation of hymexazol or a mixed formulation comprising as active ingredients hymexazol and metalaxyl are mainly used widely and generally as practice by irrigating into the soil or mixing with the soil. These two compounds are known as fungicide active ingredients.
On the other hand, fenamidone is an already known fungicide compound per se.
More information and process for their respective preparation are available in the Pesticide Manual.
Metalaxyl, a type of phenylamido compound, have been accepted by specialists in plant disease and by farmers of rice production, from the early stage of commercialisation, by the reasons of good cure effect due to the high penetrating transportation, and long after effect due to the high effect on the newly shooting leaves. Therefore, metalaxyl is widely used as a specific fungicide agent for controlling downy mildew, seedling blight, Pythium diseases notably and plant diseases by other Oomycetes species.
Especially, a combination of metalaxyl with hymexazol can enhance the control effect on seedling blight of rice, and preventive effect on occurrence of molded seedlings, consequently, has been used widely by farmers of rice production. However, the occurrence of resistant species has been reported in European countries where the commercialisation has been advanced. Following to this report, there has been introduced a recommendation in Japan to place limitation on the combination with so called protective fungicide, the timing of use, the numbers of use, the duration of spraying notably. Nevertheless, there have been observed the occurrence of late blight of potato and downy mildew of cucumber in Japan notably.
In addition, there has been reported on the occurrence of resistant species of Pythium disease of turf, which is the same type of soil disease as seedling blight of rice, in the test use of metalaxyl.
In the near future, this kind of occurrence of resistant species can be expected on seedling blight of rice, which is the same type of soil disease as Pythium disease of turf. Therefore, it is now strongly desired to consider a countermeasure in advance to overcome the reduction of control efficacy of metalaxyl.
The purpose of the present invention is to provide a fungicide composition for agriculture and horticulture which show excellent characteristics to be notably effective on the species resistant to metalaxyl agents and also show good efficacy on the seedling growth in good conditions during the preparation time period of rice seedlings.
The inventors of the present invention have studied intensively on the development of fungicide agents satisfying the said desires above. As a result, the inventors have successfully completed the fungicide composition of the present invention showing the functional mechanisms being different from metalaxyl agents, and also showing excellent control effect on resistant species to metalaxyl, in particular on rice, at the same low doses as metalaxyl agents as well as being able to show some synergistic effect.
The present invention relates to a fungicide composition for agriculture and horticulture comprising at least fenamidone and hymexazol as active ingredients.
Fenamidone is known as (S)-3,5-dihydro-5-methyl-2-(methylthio)-5-phenyl-3-(phenylamino)-4H-imidazol-4-one [formula (I)] and hymexazol is known as 5-methyl-3(2H)-isoxazolone [formula(II)]

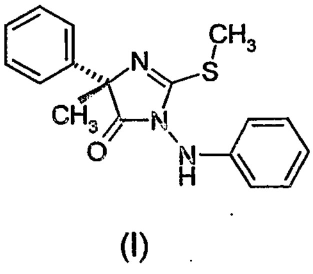

(I)

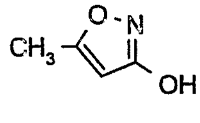

(II)

Even if wide ranges of ratio between fenamidone and hymexazol can be used in the composition of the present invention, the said ratio between fenamidone and hymexazol is preferably in the range from 1/20 to 1/3 by weight, more preferably from 1/15 to 1/4 by weight.

If the case may be, the composition of the present invention may comprise one or more others active ingredients, which can be chosen in the list of herbicide, insecticide, fungicide or plant or insect growth regulator agents. As a further active ingredient in the composition of the present invention fungicide compounds are preferred, for example azaconazole, azoxystrobin, benalaxyl, benomyl, biphenyl, bitertanol, blasticidin-S, boscalid, borax, bromuconazole, bupirimate, sec-butylamine, calcium polysulfide, captafol, captan, carbendazim, carboxin, carpropamid, chinomethionat, chlorothalonil, chlozolinate, copper hydroxide, copper octanoate, copper oxychloride, copper sulfate, cuprous oxide, cymoxanil, cyproconazole, cyprodinil, dazomet, debacarb, dichlofluanid, dichlorophen, diclocymet, diclomezine, dicloran, diethofencarb, difenoconazole, difenzoquat metilsulfate, difenzoquat, diflumetorim, dimethirimol, dimethomorph, diniconazole, dinobuton, dinocap, diphenylamine, dithianon, dodemorph, dodemorph acetate, dodine, edifenphos, epoxiconazole, ethaboxam, ethirimol, ethoxyquin, etridiazole, famoxadone, fenarimol, fenbuconazole, fenfuram, fenhexamid, fenpiclonil, fenoxanil, fenpropidin, fenpropimorph, fentin, fentin hydroxide, fentin acetate, ferbam, ferimzone, fluazinam, fludioxonil, fluoroimide, fluoxastrobin, fluquinconazole, flusilazole, flusulfamide, flutolanil, flutriafol, folpet, formaldehyde, fosetyl, fosetyl-aluminium, fuberidazole, furalaxyl, furametpyr, guazatine, guazatine acetates, hexachlorobenzene, hexaconazole, 8-hydroxyquinoline sulfate, potassium hydroxyquinoline sulfate, cyazofamid, imazalil sulfate, imazalil, imibenconazole, iminoctadine, iminoctadine triacetate, ipconazole, iprobenfos, iprodione, iprovalicarb, isoprothiolane, kasugamycin, kasugamycin hydrochloride hydrate, kresoxim-methyl, mancopper, mancozeb, maneb, mepanipyrim, mepronil, mercuric chloride, mercuric oxide, mercurous chloride, metalaxyl, metalaxyl-M, metam-sodium, metam, metconazole, methasulfocarb, methyl isothiocyanate, metiram, metominostrobin, mildiomycin, myclobutanil, nabam, nickel bis(dimethyldithiocarbamate), nitrothal-isopropyl, nuarimol, octhilinone, ofurace, oleic acid, oxadixyl, oxine-copper, oxpoconazole fumarate, oxycarboxin, pefurazoate, penconazole, pencycuron, pentachlorophenol, sodium pentachlorophenoxide, pentachlorophenyl laurate, phenylmercury acetate, sodium 2-phenylphenoxide, 2-phenylphenol, phthalide, picoxystrobin, piperalin, polyoxinspolyoxin B, polyoxorim, probenazole, prochloraz, procymidone, propamocarb hydrochloride, propamocarb, propiconazole, prothioconazole, propineb, pyrazophos, pyributicarb, pyrifenox, pyrimethanil, pyroquilon, quinoxyfen, quintozene, silthiofam, spiroxamine, sulfur, tar oils, tebuconazole, tecnazene, tetraconazole, thiabendazole, thifluzamide, thiophanate-methyl, thiram, tolclofos-methyl, tolylfluanid, triadimefon, triadimenol, triazoxide, tricyclazole, tridemorph, trifloxystrobin, triflumizole, triforine, triticonazole, validamycin, vinclozolin, zineb, ziram, zoxamide, phosphorous acid, pyraclostrobin or simeconazole.

In a case of practical use as fungicide agent of the composition of the present invention, the said active ingredients above can be mixed with already known solid or liquid carrier, diluent, surfactant or other auxiliary agent for formulation, and prepared into a usual formulation as agrochemical agent such as granule, emulsified or suspension concentrates, wettable powder, flowable formulation, dry flowable formulation or other types of formulation forms where appropriate.

As solid carrier being used for formulating a composition of the present invention, there can be cited, for example, clay represented by kaolinites, montmorillonites, illites or polygroskites, more specifically there can be cited, for example, pyrophyllite, atapulgite, sepiolite, kaolinite, bentonite, saponite, vermiculite, mica, talc.

Furthermore there can be cited, for example, other inorganic substances such as gypsum, calcium carbonate, dolomite, diatomaceus earth, magnesium line, phosphorus line, zeolite, silica anhydride, synthetic calcium silicate; organic substances of vegetable origin such as soybean flour, tobacco flour, walnut flour, wheat flour, wood flour, starch, crystalline cellulose; synthetic or natural polymers such as coumarone resin, petroleum resin, alkyd resin, polyvinyl chloride, polyalkylene glycol, ketone resin, ester gum, copal gum, dammar gum; waxes such as carnauba wax, bee wax or urea and the like.

As suitable liquid carriers, there can be cited, for example, paraffine or naphthene hydrocarbons such as kerosene, mineral oil, spindle oil, white oil; aromatic hydrocarbons such as xylene ethylbenzene, cumene, methylnaphthalene; chlorinated hydrocarbons such as trichloroethylene, monochlorobenzene, o-chlorotoluene; ether such as dioxane, tetrahydrofuran; ketone such as methyl ethyl ketone, diisobutyl ketone, cyclohexanone, acetophenone, isophorone; ester such as ethyl acetate, amyl acetate, ethylene glycol acetate, diethylene glycol acetate, dibutyl maleate, diethyl succinate; alcohol such as n-hexanol, ethylene glycol, diethylene glycol, cyclohexanol, benzyl alcohol; ether alcohol such as ethylene glycol ethyl ether, ethylene glycol phenyl ether, diethylen glycol ethyl ether, diethylene glycol butyl ether; polar solvent such as dimethylformamide, dimethyl sulfoxide or water.

Besides the said substances above, surfactant, adhesion agents and other auxiliary agents can be used for various purposes, for example, surfactant for emulsification of active ingredient, dispersion, moistening, spreading, fastening, binding, destruction control, stabilization of active ingredient, fluidity improvement, corrosion proof.
As surfactant, any type of surfactant can be used, for example, nonionic, anionic, cationic and amphoteric surfactant. However, usually nonionic and/or anionic surfactant can be used.
As examples of suitable nonionic surfactants, there can be cited, for example, polymerization additives of ethylene oxide with a higher alcohol such as lauryl alcohol, stearyl alcohol, oleyl alcohol; polymerization additives of ethylene oxide with alkylphenol such as isooctylphenol, nonylphenol; polymerization additives of ethylene oxide with alkylnaphtol such as butylnaphthol, octylnaphthol; polymerization additives of ethylene oxide with higher fatty acid such as palmitic acid,

stearic acid, oleic acid; polymerization additives of ethylene oxide with amine such as dodecylamine, stearlyamine, polymerization additives of ethylene oxide with higher fatty acid ester of higher alcohol, such as solbitan; block polymerization additives of ethylene oxide with propylene oxide.

As a suitable anionic surfactant, there can be cited, for example, alkyl sulfate salt such as sodium laurylsulfate, amine salt of sulfuric acid ester of oleyl alcohol; alkyl sulfonate salt such as sodium dioctyl sulfonsuccinate, sodium 2-ethylhexenesufonate; arylsulfonate salt such as sodium isopropylnaphthalenesulfonate, sodium methylene bisnaphthalenesufonate, sodium ligninsulfonate, sodium dodecyl benzenesulfonate.

Furthermore, for the purposes of improvement of properties, the composition of the present invention can be used in combination with polymers and other auxiliary agents, such as casein, gelatin, albumin, glue, lignin sulfonate, sodium alginate, gum arabic, xanthun gum, carboxymethyl cellulose, methyl cellulose, hydroxyethyl cellulose, polyvinyl aldol, polyvinyl pyrrolidone, polysaccharide.

The carriers and various auxiliary agents described above can be used alone or in combination with others depending on the purpose of use by considering of formulation type or application site for example.

The contents of active ingredients in the various formulations of the present invention being prepared as described above may vary widely depending on formulation type or application site. However, it is preferably in the range of 0.01 to 99% by weight, more preferably 0.1 to 80% by weight.

In a concrete example, a wettable powder formulation according to the invention contains usually, for example, the active ingredients at ratio of 1 to 90% by weight, and the remainder solid carrier and dispersion wetting agent. If necessary, colloid protection agent, antifoaming agent may be added thereto.

A granule formulation contains usually, for example, the active ingredients at ratio of 0.01 to 70 % by weight, and the remainder may be solid carrier or surfactant notably. The active ingredients may be mixed uniformly with solid carrier, or fixed to or adsorbed uniformly on the surface of solid carrier particles. The diameter of a granule particle is approximately in the range of 0.05 to 10mm, more preferably in the range of 0.2 to 5mm.

A flowable formulation according to the invention contains usually, for example, the active ingredients at ratio of 0.5 to 50 % by weight, and in addition 3 to 10 % by weight of dispersion wetting agent, and water as the remainder. If necessary, colloid protection agent, preservative, antifoaming agent may be added thereto.

Furthermore, a composition of the present invention can be prepared by mixing fenamidone and hymexazol as active ingredients with diluent, surfactant, or other auxiliary agents as described above in a tank at the time of application. In addition, each straight formulations of fenamidone and hymexazol can be applied by mixing as the occasion may demand.

Appropriate application doses of the composition of the present invention prepared as described above may depend on weather conditions, soil conditions, forms of chemical formulae, targeting crops, application times, application ways.

However, normally, based on the total amount of active ingredients, the application dose can be in the range of 0.01 to 1000g, preferably 0.1 to 100g per hectare. Furthermore, an agricultural agent with manpower saving can be made by adding other agents such as insecticide, fungicide, plant growth regulator to a composition of the present invention.

The composition according to the invention can be used in a method for the control of plant disease either a curative or a preventive method, in particular of Pythium species0 notably of *Pytium graminicola*. With preference this method according to the invention can be used on fungi strains showing some resistance to metalaxyl fungicide active ingredient.

The plants that can be protected or treated with the composition according to the present invention are preferably cereal crops, in particular for the control of rice diseases.

The following examples are given by way of illustration of the present invention and do not limit it in any manner.

Formulation Example 1 (dust formulation)

| | |
|---|---|
| Fenamidone | 0.5 weight % |
| hymexazol (free acid) | 4.0 weight % |
| Keiwa Clay Huhi | 95.5 weight % |

The above mixture was pulverised uniformly using an Equ Sample KII-1 Model manufactured by Fuji Powder Company Ltd to obtain dust formulation. Keiwa Clay Huhi is a commercial product of Keiwa Rozai Company Ltd

Formulation Example 2 (flowable formulation)

(1) Process of fenamidone slurry

| | |
|---|---|
| Fenamidone | 50.0 weight % |
| Tamol DN (manufactured by BASF) | 2.0 weight % |
| KP-1436 (manufactured by Kao Company Ltd | 0.5 weight % |
| Surphenol (manufactured by Nissin Chemical Industry Company Ltd) | 0.1 weight % |
| Water | 47.4 weight % |

The above mixture was pulverised uniformly under wet conditions by a 0.1S Atoliter (manufactured by Mitsui Mining Company Ltd) to obtain fenamidone slurry (diameter of particle : D50 : 2.67μm).

(2) Process for the solution

| | |
|---|---|
| PittuCoal K-30 (manufactured by Daiichi Kogyo Company Ltd) | 12.5 weight % |
| Propylene glycol (manufactured by Go Do Solvent Company Ltd) | 62.5 weight % |
| Water | 25.0 weight % |

The above mixture was mixed to obtain the solution.

(3) Process for the solution of viscosity enhancement

| | |
|---|---|
| KuniPia F (manufactured by Kuni Mine Chemical Industry Company Ltd) | 0.6 weight % |
| Propylene glycol | 5.0 weight % |
| Water | 94.4 weight % |

The above mixture was mixed to obtain a solution of the viscosity enhancement

(4) Process for formulation of the aqueous suspension

| | |
|---|---|
| fenamidone slurry prepared by the Process (1) | 8 weight % |
| Solution prepared by the Process (2) | 4 weight % |
| Solution of Viscosity enhancement prepared by the Process (3) | 25 weight % |

Sixty weight % of an already prepared ammonium solution of hymexazol (50 % by weight) was added to the above mixture, and the total volume was adjusted to 100 weight % by adding water.
Thus, an aqueous suspension comprising 4.0 weight % of fenamidone and 30.0 weight % of hymexazole was obtained.

Formulation example 3 (Wettable powder)

| | |
|---|---|
| Fenamidone | 4 weight % |
| hymexazol (free acid) | 30 weight % |
| CarpLex # 80-D (manufactured by Shionogi Pharmaceutical Company Ltd) | 10 weight % |
| GoSeNol GL 05 (manufactured by Nippon Gosei Chemical Industry Company Ltd) | 2 weight % |
| NewCoal 291 PG (manufactured by Nippon Nyukazai Company Ltd) | 0.5 weight % |
| NeoGen Powder (manufactured by Daiichi Kogyo Pharmaceutical Company Ltd) | 5 weight % |
| Radiollite # 200 (manufactured by Showa Chemical Industry Company Ltd) | 10 weight % |
| H Bihun (manufactured by Keiwa Rozai Company Ltd) | 38.5 weight % |

The above mixture was pulverized uniformly by using an Equ Sample KII-1 Model manufactured by Fuji Powder Company Ltd obtain dust wettable powder.

Formulation Example 4 (liquid formulation)

| | |
|---|---|
| Fenamidone | 4 weight % |
| hymexazol (free acid) | 30 weight % |
| N-methyl-2-pyrrolidone (manufactured by Kurare Company Ltd) | 66 weight % |

The above mixture was mixed and filtrated by Radiollite # 200 to obtain a liquid formulation according to the invention.

Test example 1: test of dust formula of the formulation example 1 on seedling blight of rice

Culture of *Pythium graminicola* being cultured in advance in the medium of rice bran was mixed with artificial soil and supplied as fungal contaminated soil. A plastic box of the size 1/15 of a nursery box for rice seedlings was used as container and one box was used as one plot.
Each sample of test compound being predetermined was mixed with the fungal contaminated soil (soil mixture prior to sowing) and seeds were sown and covered with the fungal contaminated soil.
These containers were placed in a humidified room at 30°C for 3 days, continuously in a room at 10°C for 3 days and assessed the effect after keeping in a room of normal room temperature for 2 weeks.
The assessment was achieved by measuring the number of seedlings showing rice blight symptoms and brawn roots, and the control effect was expressed as numbers of infected seedling per 100 seedlings in one plot.
In addition, synergistic effect was determined based on the Colby formula for calculation of synergistic and antagonistic response of active ingredient combinations, published in Weed 15 (1967) 20-22.
The Colby formula can be expressed as the following in case of combination of two types of herbicides.

$$E = X + Y - (XY/100)$$

Wherein X means the control effect (%) of Compound A of effective dose p, Y means the control effect (%) of Compound B of effective dose q, and E means expected control effect (%) of Compound A + B of effective dose p + q (theoretical value).
In case that the actually measured value is higher than the theoretical value calculated with the Colby formula, it can be elucidated that the effect of such combination is over the additive effect, namely such combination shows synergistic effect.
The results of the above test example are shown in the following table 1.

Table 1: Test results of dust formula of the formulation example 1 on rice seedling blight

| Sample | Dose (as active ingredient) Calculated as 200 nursery boxes /ha | Control efficacy | E |
|---|---|---|---|
| fenamidone | 6 g/ha | 90 | |
| hymexazol | 48g/ha | 70 | |
| fenamidone + hymexazol | 6 g + 48 g/ha | 100 | 97 |

As clearly seen in the test results of table 1, the actually measured value is over than the theoretical value (E) in the test results using the dust formula of the formulation example 1. Therefore, it can be said that the composition of the present invention is over the additive effect, namely, shows synergistic effect.

Test example 2: Test of flowable (SC) formula of the formulation example 2 on seedling blight of rice

This test was achieved by using the same fungal contaminated soil and containers as for the test example 1. As application of chemicals, each liquid sample (500 ml / nursery box) being prepared in advance was applied by irrigating into the soil after seed sowing and afterward covered by the fungal contaminated soil.
The test process and assessment were achieved afterwards by according to those being explained in the test example 1. These results are shown in table 2.

Table 2: Test results of flowable formula (SC) of the formulation example 2 on rice seedling blight

| Sample | Dose (as active ingredient) Calculated as 200 nursery boxes /ha | Control efficacy | E |
|---|---|---|---|
| fenamidone SC | 4 g/ha | 90 | |
| hymexazol SC | 30 g/ha | 75 | |
| fenamidone + hymexazol SC | 4 g + 30 g/ha | 100 | 97.5 |

As clearly seen in the test results of table 2, the actually measured value is over than the theoretical value (E) in the test results using the flowable formulation (SC) of the formulation example 2. Therefore, it can be said that the composition of the present invention is over the additive effect, namely, shows synergistic effect.

The compositions of the present invention, being clearly demonstrated in the above test examples, show excellent control effect on seedling blight of rice. This excellent effect has been obtained by combination of two different fungicides being different in functional mechanism, therefore, it can be said that such excellent effect is due to synergistic effect over the additive effect.

## Claims

1. A fungicide composition comprising fenamidone and hymexazol as active ingredients.

2. A fungicide composition according to claim 1 in which the ratio between fenamidone and hymexazol is in the range from 1/20 to 1/3 by weight.

3. A fungicide composition according to claim 2 in which the ratio is in the range from 1/15 to 1/4 by weight.

4. A fungicide composition according to claims 1 to 3 further comprising a fungicide active ingredient.

5. A fungicide composition according to claims 1 to 4 further comprising one or more solid or liquid carrier, diluent, surfactant or other auxiliary agent for formulation, and prepared into a usual formulation as agrochemical.

6. A fungicide composition according to claims 1 to 5 in which the active ingredient content is in the range of 0.1 to 80% by weight.

7. A method for the curative or a preventive control of plant disease using a composition according to claims 1 to 6.

8. A method according to claim 7 for the protection or treatment of cereal crops.

9. A method according to claim 8 for the control of rice diseases.

10. A method according to claims 7 to 9 for the control of Pythium species.

11. A method according to claim 10 for the control of *Pytium graminicola*.

12. A method according to claims 10 or 11 for the control of strains resistant to metalaxyl.

**Patentansprüche**

1. Fungizidzusammensetzung, die als Wirkstoffe Fenamidone und Hymexazol enthält.

2. Fungizidzusammensetzung nach Anspruch 1, in der das Gewichtsverhältnis zwischen Fenamidone und Hymexazol im Bereich von 1/20 zu 1/3 liegt.

3. Fungizidzusammensetzung nach Anspruch 2, in der das Gewichtsverhältnis im Bereich von 1/15 bis 1/4 liegt.

4. Fungizidzusammensetzung nach den Ansprüchen 1 bis 3, die weiterhin einen fungiziden Wirkstoff enthält.

5. Fungizidzusammensetzung nach den Ansprüchen 1 bis 4, die weiterhin ein(en) oder mehrere feste(n) oder flüssige (n) Träger, Verdünnungsmittel, Tensid(e) oder sonstige(n) Formulierungshilfsstoff(e) enthält und die in die Form einer üblichen Agrarchemikalienformulierung gebracht wird.

6. Fungizidzusammensetzung nach den Ansprüchen 1 bis 5, in der der Wirkstoffgehalt im Bereich von 0,1 bis 80 Gew.-% liegt.

7. Verfahren für die kurative oder präventive Bekämpfung einer Pflanzenkrankheit mit Hilfe einer Zusammensetzung nach den Ansprüchen 1 bis 6.

8. Verfahren nach Anspruch 7 für den Schutz oder die Behandlung von Getreidekulturen.

9. Verfahren nach Anspruch 8 für die Bekämpfung von Reiskrankheiten.

10. Verfahren nach den Ansprüchen 7 bis 9 für die Bekämpfung von Pythium-Arten.

11. Verfahren nach Anspruch 10 für die Bekämpfung von *Pythium graminicola*.

12. Verfahren nach Anspruch 10 oder 11 für die Bekämpfung von metalaxylresistenten Stämmen.

**Revendications**

1. Composition fongicide comprenant de la fénamidone et de l'hymexazol comme ingrédients actifs.

2. Composition fongicide selon la revendication 1 dans laquelle le rapport entre la fénamidone et l'hymexazol est dans la plage de 1/20 à 1/3 en poids.

3. Composition fongicide selon la revendication 2 dans laquelle le rapport est dans la plage de 1/15 à 1/4 en poids.

4. Composition fongicide selon les revendications 1 à 3 comprenant en plus un ingrédient fongicide actif.

5. Composition fongicide selon les revendications 1 à 4 comprenant en plus un ou plusieurs supports solides ou liquides, diluants, tensioactifs ou autres agents auxiliaires pour la formulation et préparée sous la forme d'une

formulation usuelle en agrochimie.

**6.** Composition fongicide selon les revendications 1 à 5 dans laquelle la teneur en ingrédient actif est dans la plage de 0,1 à 80% en poids.

**7.** Procédé de lutte curative ou préventive contre des maladies des plantes utilisant une composition selon les revendications 1 à 6.

**8.** Procédé selon la revendication 7 pour la protection ou le traitement de cultures céréalières.

**9.** Procédé selon la revendication 8 pour la lutte contre des maladies du riz.

**10.** Procédé selon les revendications 7 à 9 pour la lutte contre des espèces de Pythium.

**11.** Procédé selon la revendication 10 pour la lutte contre le *Pythium graminicola*.

**12.** Procédé selon les revendications 10 ou 11 pour la lutte contre des souches résistantes au métalaxyl.